(19) **Europäisches Patentamt / European Patent Office / Office européen des brevets**

(11) **EP 1 923 154 A2**

(12) **EUROPEAN PATENT APPLICATION**

(43) Date of publication:
**21.05.2008 Bulletin 2008/21**

(51) Int Cl.:
*B22F 1/00* (2006.01)    *C22C 29/06* (2006.01)
*C23C 4/12* (2006.01)

(21) Application number: **07120685.8**

(22) Date of filing: **14.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.11.2007 US 939330**
**10.05.2007 US 917163 P**
**14.11.2006 US 858830 P**

(71) Applicant: **SMITH INTERNATIONAL, INC.**
**Houston,**
**Texas 77032 (US)**

(72) Inventors:
• **Zhang, Youhe**
**Tomball, TX 77377 (US)**

• **Zhan, Guodong**
**Spring, TX 77386 (US)**
• **Sheng, Xiayang**
**Sugar Land, TX 77478 (US)**
• **Lockstedt, Alan W.**
**Magnolia, TX 77354 (US)**
• **Shen, Yuelin**
**Spring, TX 77386 (US)**
• **Deng, Hong**
**Houston, TX 77040 (US)**
• **Griffo, Anthony**
**The Woodlands, TX 77382 (US)**
• **Keshavan, Madapusi K.**
**The Woodlands, TX 77382 (US)**

(74) Representative: **Brykman, Georges**
**Osha Liang**
**121, Avenue des Champs Élysées**
**75008 Paris (FR)**

(54) **Hybrid carbon nanotube reinforced composite bodies**

(57) A composite body for cutting tools that includes a ductile phase; a plurality of carbide particles dispersed the ductile phase; and a plurality of nanotubes integrated into the composite body is disclosed. Methods of making such composite bodies and drill bits formed of such material are also disclosed.

Figure 3

**Description**

CROSS-REFERENCE TO RELATED APPLICATIONS

This application, pursuant to 35 U.S.C. § 119(e), claims the benefit of U.S. Patent Application No. 60/858,830 filed on November 14, 2006, and U.S. Patent Application No. 60/917,163 filed on May 10, 2007, both of which are incorporated by reference in their entirety

BACKGROUND OF INVENTION

Field of the Invention

Embodiments disclosed herein relate generally to composite materials used in cutting tools.

Background Art

Historically, there have been two types of drill bits used drilling earth formations, drag bits and roller cone bits. Roller cone bits include one or more roller cones rotatably mounted to the bit body. These roller cones have a plurality of cutting elements attached thereto that crush, gouge, and scrape rock at the bottom of a hole being drilled. Several types of roller cone drill bits are available for drilling wellbores through earth formations, including insert bits (e.g. tungsten carbide insert bit, TCI) and "milled tooth" bits. The bit bodies and roller cones of roller cone bits are conventionally made of steel. In a milled tooth bit, the cutting elements or teeth are steel and conventionally integrally formed with the cone. In an insert or TCI bit, the cutting elements or inserts are conventionally formed from tungsten carbide, and may optionally include a diamond enhanced tip thereon.

The term "drag bits" refers to those rotary drill bits with no moving elements. Drag bits are often used to drill a variety of rock formations. Drag bits include those having cutting elements or cutters attached to the bit body, which may be a steel bit body or a matrix or composite bit body formed from a matrix material such as tungsten carbide surrounded by an binder material. The cutters may be formed having a substrate or support stud made of carbide, for example tungsten carbide, and an ultra hard cutting surface layer or "table" made of a polycrystalline diamond material or a polycrystalline boron nitride material deposited onto or otherwise bonded to the substrate at an interface surface.

Thus, some of the primary materials used in the formation of various components in drill bits, as well as other cutting tools, include ceramic materials formed from tungsten carbide. In composites formed with tungsten carbide, for example, the resulting composite includes the hard particle surrounded by metal binder, typically cobalt- or copper-based alloys, which acts as a matrix. The individual hard particles thus are embedded in a matrix of a relatively ductile metal such that the ductile metal matrix provides the necessary toughness, while the grains of hard material in the matrix furnish the necessary wear resistance. The ductile metal matrix also reduces crack formation and suppresses crack propagation through the composite material once a crack has been initiated.

Many factors affect the durability of a tungsten carbide composite in a particular application. These factors include the chemical composition and physical structure (size and shape) of the carbides, the chemical composition and microstructure of the matrix metal or alloy, and the relative proportions of the carbide materials to one another and to the matrix metal or alloy. Generally, as the tungsten carbide particle size and/or cobalt content decrease, higher hardness, compressive strength, and wear resistance, but lower toughness is achieved. Conversely, larger particle sizes and/or higher cobalt content yields high toughness and impact strength, but lower hardness.

Many different types of tungsten carbides are known based on their different chemical compositions and physical structure. Depending on the particular application, different types of carbides, or combinations thereof, may be used. Bit components that have been formed from tungsten carbide include, for example, inserts for roller cone bits, cutter substrates for drag bits, bit bodies, hardfacing, etc. Among the various types of tungsten carbide commonly used in drill bit bodies or other cutting tool bodies are cast tungsten carbide, macro-crystalline tungsten carbide, carburized tungsten carbide, and cemented tungsten carbide (also known as sintered tungsten carbide).

One type of tungsten carbide is macro-crystalline carbide. This material is essentially stoichiometric tungsten carbide created by a thermite process. Most of the macro-crystalline tungsten carbide is in the form of single crystals, but some bicrystals of tungsten carbide may also form in larger particles. Single crystal stoichiometric tungsten carbide is commercially available from Kennametal, Inc., Fallon, NV.

Carburized carbide is yet another type of tungsten carbide. Carburized tungsten carbide is a product of the solid-state diffusion of carbon into tungsten metal at high temperatures in a protective atmosphere. Sometimes, it is referred to as fully carburized tungsten carbide. Such carburized tungsten carbide grains usually are multi-crystalline, i.e., they are composed of tungsten carbide agglomerates. The agglomerates form grains that are larger than the individual tungsten carbide crystals. These large grains make it possible for a metal infiltrant or an infiltration binder to infiltrate a powder of such large grains. On the other hand, fine grain powders, e.g., grains less than 5 $\mu$m, do not infiltrate satisfactorily. Typical carburized tungsten carbide contains a minimum of 99.8% by weight of tungsten carbide, with a total carbon content in the range of about 6.08% to about 6.18% by weight.

Cast tungsten carbide, on the other hand, is formed by melting tungsten metal (W) and tungsten monocarbide (WC) together such that a eutectic composition of WC and W2C, or a continuous range of compositions therebetween, is formed. Cast tungsten carbide typically is frozen from the molten state and comminuted to a desired particle size.

A fourth type of tungsten carbide, which has been typically used in hardfacing, is cemented tungsten carbide, also known as sintered tungsten carbide. Sintered tungsten carbide comprises small particles of tungsten carbide (e.g., 1 to 15 microns) bonded together with cobalt. Sintered tungsten carbide is made by mixing organic wax, tungsten carbide and cobalt powders, pressing the mixed powders to form a green compact, and "sintering" the composite at temperatures near the melting point of cobalt. The resulting dense sintered carbide can then be crushed and comminuted to form particles of sintered tungsten carbide.

For conventional tungsten carbide composites, the mechanical property of fracture toughness is inversely proportional to hardness, and wear resistance is proportional to hardness. Although the fracture toughness of cemented tungsten carbide has been somewhat improved over the years, it is still a limiting factor in demanding industrial applications such as high penetration drilling, where cemented tungsten carbide inserts often exhibit gross brittle fracture that can lead to catastrophic failure. Traditional metallurgical methods for enhancing fracture toughness, such as grain size refinement, cobalt content optimization, and strengthening agents, have been substantially exhausted with respect to conventional cemented tungsten carbide.

Bit bodies formed from either cast or macrocrystalline tungsten carbide or other hard metal matrix materials, while more erosion resistant than steel, lack toughness and strength, thus making them brittle and prone to cracking when subjected to impact and fatigue forces encountered during drilling. This can result in one or more blades breaking off the bit causing a catastrophic premature bit failure. Additionally, the braze joints between the matrix material and the PDC cutters may crack due to these same forces. The formation and propagation of cracks in the matrix body and/or at the braze joints may result in the loss of one or more PDC cutters. A lost cutter may abrade against the bit, causing further accelerated bit damage. However, bits formed with sintered tungsten carbide may have sufficient toughness and strength for a particular application, but may lack other mechanical properties, such as erosion resistance.

Regardless of the type of material used in a particular drilling or cutting tool application, designers continue to seek improved properties (such as improved wear resistance, thermal resistance, fracture toughness etc.) in the ceramic materials. Further, as the bulk particles used in ceramic materials decrease in size with the increasing use of nanoparticles (grain sizes less than 100 nm), observed brittleness has limited potential applications for the resulting material. It has been known for some time that the addition of fibrous materials to materials may increase mechanical properties, such as strength. However, incorporation of the fibrous materials, such as carbon fibers, has presented difficulties including resistance to wetting of the fibers and reaction between the metal and carbide.

Accordingly, there exists a continuing need for a new composite or matrix body composition for drill bits and other cutting tools which has high strength and toughness, while maintaining other desired properties such as wear and erosion resistance.

SUMMARY OF INVENTION

In one aspect, embodiments disclosed herein relate to a composite body for cutting tools that includes a ductile phase; a plurality of carbide particles dispersed the ductile phase; and a plurality of nanotubes integrated into the composite body.

In another aspect, embodiments disclosed herein relate to a method of forming a composite body for a cutting tool that includes integrating a plurality of nanotubes in one of a plurality of carbide particles and a binder phase; mixing the other of the one of a plurality of carbide particles and a binder phase; and consolidating the mixture.

In yet another aspect, embodiments disclosed herein relate to a drill bit that includes a bit body and at least one cutting element for engaging the formation disposed on the bit body, wherein the bit body includes a ductile phase; a plurality of carbide particles dispersed the ductile phase; and a plurality of nanotubes integrated into the bit body.

Other aspects and advantages of the invention will be apparent from the following description and the appended claims.

BRIEF DESCRIPTION OF DRAWINGS

FIG. 1 shows a microstructure of a conventional tungsten carbide composite.

FIG. 2 shows a fluidized bed reactor that may be used in accordance with one embodiment of the present disclosure.

FIG. 3 is a perspective side view of a drag bit in accordance with one embodiment of the present disclosure.

FIG. 4 is a perspective side view of an impreg bit in accordance with one embodiment of the present disclosure.

FIG. 5 is a schematic according to one embodiment of the present disclosure.

DETAILED DESCRIPTION

In one aspect, embodiments disclosed herein relate to composite or matrix bodies used in components of downhole cutting tools, including drill bits, mining picks, core bits, etc. In particular, embodiments relate to composite bodies having formed from tungsten carbide particles surrounded by a ductile metal matrix binder with a reinforcing nanotubular material.

In addition, embodiments of the present disclosure provide composite bodies which are formed from such tungsten carbides infiltrated by suitable metals or alloys as infiltration binders. Such a composite body may have high transverse rupture strength and toughness while maintaining wear and erosion resistance. Embodiments of the present disclosure are based, in part, on the determination that the life of a composite bit body is related to the body's strength (also known as transverse rupture strength), toughness, and resistance to erosion.

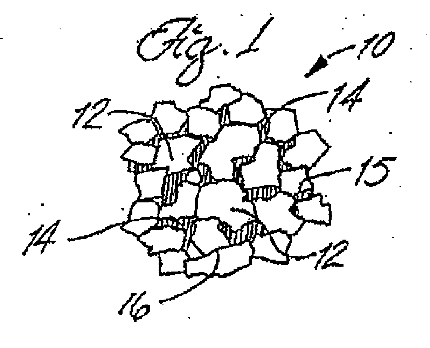

FIG. 1 illustrates the conventional microstructure of cemented tungsten carbide. As shown in FIG. 1, cemented tungsten carbide 10 includes tungsten carbide grains 12 that are bonded to one another by a metal binder phase 14. As illustrated, tungsten carbide grains may be bonded to other grains of tungsten carbide, thereby having a tungsten carbide/tungsten carbide interface, and/or may be bonded to the metal phase, thereby having a tungsten carbide/metal interface. The unique properties of cemented tungsten carbide result from this combination of a rigid carbide network with a tougher metal substructure. The generic microstructure of cemented tungsten carbide, a heterogenous composite of a ceramic phase in combination with a metal phase, is similar in all cermets.

The relatively low fracture toughness of cemented tungsten carbide has proved to be a limiting factor in more demanding applications, such as in roller cone rock bits, hammer bits and drag bits used for subterranean drilling and the like. It is possible to increase the toughness of the cemented tungsten carbide by increasing the amount of metal binder present in the composite. The toughness of the composite mainly comes from plastic deformation of the metal phase during the fracture process. Yet, the resulting hardness of the composite decreases as the amount of ductile metal increases. Thus, an upper limit on the amount of metal phase typically exists.

As evident from FIG. 1, the metal phase is not necessarily continuous in the conventional cemented tungsten carbide microstructure, particularly in compositions having a low metal concentration. Further, while a relatively uniform distribution of tungsten carbide in a metal matrix is desired, typically inadequate mixing/infiltration results in agglomerates of tungsten carbide particles and pools of binder. Thus, a crack propagating through the composite will often travel through the less ductile tungsten carbide grains, either transgranularly through tungsten carbide/metal interfaces or intergranularly through tungsten carbide/tungsten carbide interfaces. As a result, cemented tungsten carbide often exhibits gross brittle fracture during more demanding applications, which may lead to catastrophic failure.

Generally, embodiments of the present disclosure may include composite body constructions comprising hard phase particulate materials and a relatively softer binder phase material, where the composite body construction is also provided with a reinforcing nanotube material. A cermet or sintered material formed with a reinforcing nanotube material may find particular use as cutting tool composite bodies.

As used herein, the term "nanotube material" refers to various materials having having a cylindrical or tubular configuration with at least one dimension, such as length or diameter, between 1 and 100 nanometers. Types of nanotubes that may find use as a reinforcing nanotubes material in the present disclosure may include carbon nanotubes (CNTs), including both single-walled (SWNT), double-walled (DWNT), multi-walled (MWNT), inorganic nanotubes, multibranched nanotubes, and CNT-$C_{60}$ hybrids. Additionally, in some embodiments, at least a portion of the surface of the reinforcing nanotubes may be modified.

Carbon nanotubes are polymers of pure carbon, which may be functionalized or otherwise modified. Both SWNTs and MWNTs are known in the art and the subject of a considerable body of published literature. Examples of literature on the subject are Dresselhaus, M. S., et al., Science of Fullerenes and Carbon Nanotubes, Academic Press, San Diego (1996), and Ajayan, P. M., et al., "Nanometre-Size Tubes of Carbon," Rep. Prog. Phys. 60 (1997): 1025-1062. The structure of a single-wall carbon nanotube may be described as a single graphene sheet rolled into a seamless cylinder whose ends are either open or closed. When closed, the ends are capped by either half fullerenes or more complex structures including pentagons.

Nanotubes frequently exist as "ropes," or bundles of 10 to 100 nanotubes held together along their length by van der Waals forces, with individual nanotubes branching off and joining nanotubes of other "ropes." Multi-walled carbon nanotubes are multiple concentric cylinders of graphene sheets. The cylinders are of successively larger diameter to fit one inside another, forming a layered composite tube bonded together by van der Waals forces, with a typical distance of approximately 0.34 nm between layers, as reported by Peigney, A., et al., "Carbon nanotubes in novel ceramic matrix nanocomposites," Ceram. Inter. 26 (2000) 677-683.

Carbon nanotubes are commonly prepared by arc discharge between carbon electrodes in an inert gas atmosphere. The product is generally a mixture of single-wall and multi-wall nanotubes, although the formation of single-wall nanotubes can be favored by the use of transition metal catalysts such as iron or cobalt. The electric arc method, as well as other methods for the synthesis of carbon nanotubes is described in, for example, "Nanometre-Size Tubes of Carbon," P.M. Ajayan and T.W. Ebbesen, Rep. Prog. Phys., 60, 1025-1062 (1997).

Inorganic nanotubes may include those prepared from a range of materials including boron nitride, silicon nitride, silicon carbide, dichalcogenides, for example, $WS_2$, oxides such as $HfO_2$ and $MoO_3$, metallic nanotubes, such as Co and Au, and materials having a composition $B_xC_yN_z$, where x, y, and z may be independently selected from 0 to 4, including for example, $BC_2N_2$ and $BC_4N$, and combinations thereof.

In a particular embodiment, the average diameter of the nanotube materials may range from about 1 to 100 nanometers. In various other embodiments, the reinforcing phase may include SWNTs having an average diameter of about 1 to 2 nanometers and/or MWNTs having an average diameter of about 2 to 30 nanometers. Nanotube materials typically have a very high aspect ratio, that is, the ratio of length to diameter. In a particular embodiment, the nanotubes used in the present disclosure may have an aspect ratio ranging from about 25 to 1,000,000, and preferably from about 100 to about 1,000.

The surface of the carbon nanotubes may, in one embodiment, be modified prior to incorporation into the composites of the present disclosure. In some embodiments, the nanostructured carbon material is modified by a chemical means to yield derivatized nanostructured carbon material. As used herein, "derivatization" refers to the attachment of other chemical entities to the nanostructured carbon material, which may be by chemical or physical means including, but not limited to, covalent bonding, van der Waals forces, electrostatic forces, physical entanglement, and combinations thereof. In other embodiments, the nanostructured carbon material is modified by a physical means selected from the group consisting of plasma treatment, heat treatment, ion bombardment, attrition by impact, milling and combinations thereof. In yet other embodiments, the nanostructured carbon material is modified by a chemical means selected from the group consisting of chemical etching by acids either in liquid or gaseous form, chemical etching by bases either in liquid or gaseous form, electrochemical treatments, and combinations thereof.

One of ordinary skill in the art would appreciate that derivatization or functionalization may be desired so as to increase ease in solubilization and/or disperson of the nanotubes into at least one of the component phases prior to formation of a composite material. Functionalization or derivatization may occur by the incorporation of various chemical moieties on either end caps and/or sidewalls (either exterior or interior) of the nanotube materials, or with a coating placed thereon.

For example, functionalization may occur through covalent and/or non-covalent functionalization, endcap and/or sidewall functionalization, exohedral and/or endohedral functionalization and supramolecular complexation. A variety of functionalized nanotubes have been developed so as to enable dispersion of the nanostructures into composite materials, including fluoronanotubes, carboxy-nanotubes, and various covalently bonded nanotubes, including amino-CNTs, vinyl-CNTs, epoxy-CNTs. Oxidation of nanotubes may result in carboxyl, hydroxyl, or carbonyl groups, which may be further modified via amidation or etherification, for example. Additionally, functionalization frequently occurs through an initial fluorination, and then subsequent nucleophilic attack, or via a free radical reaction to form a covalent carbon-carbon bond. Further, U.S. Patent Nos. 7,122,165, 7,105,596, 7,048,999, 6,875,412, 6,835,366, 6790,425, 2005/0255030, which are all herein incorporated by reference in their entirety, disclose various sidewall and endcap functionalizations that may, for example, be used to assist in integration of nanotubes in a composite body of the present disclosure.

Additionally, in another embodiment, the nanotube materials of the present disclosure may be provided with ultra-thin, conformal coating thereon. As used herein, "ultra-thin" refers to a thickness of less than 100 nm. In a particular embodiment, the ultra-thin coating may have a thickness ranging from about 0.1 to about 50 nm, from about 0.5 to 35 nm in another embodiment, and from about 1 to 10 nm in yet another embodiment. "Conformal" refers to a relatively uniform thickness across the surface of the particle such that the surface shape of a coated particle is substantially similar to that of the uncoated particle.

Depending on the desired application of the nanotube material, type of nanotube material, and type of particulate material to which the reinforcing tubular material is added, the composition of the coatings may vary. In a particular embodiment, the coating may include a sinterable material including, for example, metals, metal alloys, ceramic materials, and cermets.

For example, coatings that may be suitable for use on the nanotube materials of the present disclosure may include metals and binary materials, i.e., materials of the form $Q_xRy$, where Q and R represent different atoms and x and y are numbers that reflect an electrostatically neutral material. Among the suitable binary materials are various inorganic ceramic materials including oxides, nitrides, carbides, sulfides, fluorides, and combinations thereof. Examples of oxides that may find use in the present disclosure include those such as CoO, $Al_2O_3$, $TiO_2$, $Ta_2O_5$, $Nb_2O_5$, $ZrO_2$, $HfO_2$, $SnO_2$, ZnO, $La_2O_3$, $Y_2O_3$, $CeO_2$ $Sc_2O_3$, $Er_2O_3$, $V_2O_5$, $SiO_2$, $In_2O_3$, and the like. Examples of nitrides that may find use in the present disclosure include those such as $Si_3N_4$, A1N, TaN, NbN, TiN, MoN, ZrN, HfN, GaN, and the like. Examples of carbides that may find use in the present disclosure include those such as SiC, WC, and the like. Examples of sulfides that may find use in the present disclosure include those such as ZnS, SrS, CaS, PbS, and the like. Examples of fluorides that may find use in the present disclosure include those such as $CaF_2$, $SrF_2$, $ZnF_2$, and the like. Among the suitable metal coatings include Pt, Ru, Ir, Pd, Cu, Fe, Co, Ni, W, and the like. Other types of materials that may be used to form an ultra-thin conformal coating include those described in U.S. Patent No. 6,613,383, which is hereby incorporated by reference in its entirety. Coatings suitable for use in the present disclosure may also include mixed structures, such as TiA1N, Ti3A1N, ATO (AlTiO), coatings including doped metals, such as ZnO:Al, ZnS:Mn, SrS:Ce, $Al_2O_3$:Er, $ZrO_2$:Y, which may also include other rare earth metals ($Ce^{3+}$, $Tb^{3+}$, etc.) for doping or co-doping, or nanolaminates, such as $HfO_2$/$Ta_2O_5$, $TiO_2$/$Ta_2O_5$, $TiO_2$/$Al_2O_3$, ZnS/$Al_2O_3$, and the like. Further, other inorganic species such as inorganic polymers may be suitable for coatings of the present disclosure, including inorganic polymers such as, for example, polysilanes, polysiloxanes, polystannanes, polyphosphazene, polysulfides, and hybrid polymers of a grafted inorganic and organic polymer.

In a particular embodiment, the coating itself may be a reagent or catalyst that functions as a sintering aid in the formation of a cermet composite. Thus, the ultra-thin coating may provide a high surface area of catalyst or reactive material and/or provide a means for finely dispersing the coating material. For example, the tubular materials of the present disclosure may be coated with a material such as aluminum oxide, which may function as a sintering aid.

In a particular embodiment, the ultra-thin, conformal coating of the present disclosure may be applied on the tubular materials through atomic layer controlled growth techniques or atomic layer deposition (ALD). ALD deposition of coatings is described, for example, in U.S. Patent No. 6,913,827, which is herein incorporated by reference in its entirety. ALD methods use self-limiting surface chemistry to control deposition. Under the appropriate conditions, deposition may be limited to a small number of functional groups on the surface, i.e., approximately one monolayer or ~1 x $10^{15}$ species per $cm^2$. ALD permits the deposition of coatings of up to about 0.3 nm in thickness per reaction cycle, and thus provide a means for controlling thickness to extremely fine thicknesses. In these techniques, the coating may be formed in a series of two or more self-limited reactions, which in most instances can be repeated to subsequently deposit additional layers of the coating material until a desired coating thickness is achieved. In most instances, the first of these reactions may involve some functional group on the surface of the particle, such as an M-H, M-O-H, or M-N-H group, where M represents an atom of a metal or semi-metal. The individual reactions may be carried out separately and under conditions such that all excess reagents and reaction products are removed before concluding the succeeding reaction. The particles may optionally be treated prior to initiating the reaction sequence to remove volatile materials that may have absorbed onto the surface of the particulate materials. This may be readily done by exposing the particles to elevated temperatures and/or vacuum.

Additionally, in some instances a precursor reaction may be performed to introduce desirable functional groups onto the surface of the tubular material to facilitate a reaction sequence in creating an ultra-thin coating. Examples of such functional groups include hydroxyl groups, amino groups, and metal-hydrogen bonds, which may serve as a site of further reaction to allow formation of an ultra-thin coating. Functionalization may be achieved through surface treatments including, for example, water plasma treatment, ozone treatment, ammonia treatment, and hydrogen treatment.

Oxide coatings may be prepared on particles having surface hydroxyl or amine (M-N-H) groups using a binary (AB) reaction sequence as follows. The asterisk (*) indicates the atom that resides at the surface of the particle or coating, and Z represents oxygen or nitrogen. $M^1$ is an atom of a metal (or semimetal such as silicon), particularly one having a valence of 3 or 4, and X is a displaceable nucleophilic group. The reactions shown below are not balanced, and are only intended to show the reactions at the surface of the particles (i.e., not inter- or intralayer reactions).

$$M–Z–H* + M^1X_n \rightarrow M–Z–M^1X* + HX \qquad (A1)$$

$$M–Z–M^1X* + H_2O \rightarrow M–Z–M^1OH* + HX \quad (B1)$$

In reaction A1, reagent $M^1X_n$ reacts with one or more M-Z-H groups on the surface of the particle to create a "new" surface group having the form -$M^1$X. $M^1$ is bonded to the particle through one or more Z atoms. The -$M^1$X group represents a site that can react with water in reaction B1 to regenerate one or more hydroxyl groups. The groups formed in reaction B1 can serve as functional groups through which reactions A1 and B1 can be repeated, each time adding a new layer of $M^1$ atoms. Atomic layer controlled growth and additional binary reactions are described in more detail in U.S. Patent No. 6,613,383, which is herein incorporated by reference in its entirety.

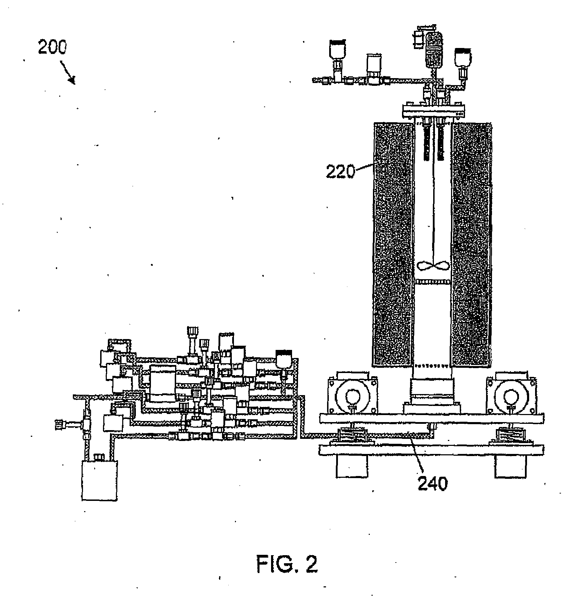

A convenient method for applying the ultra-thin, conformal coating to particulate material is to form a fluidized bed of the particles, and then pass the various reagents in turn through the fluidized bed under reaction conditions. Methods of fluidizing particulate material are well known and are described, for example, "Nanocoating Individual Cohesitve Boron Nitride Particles in a Fluidized Bed Reactor," Jeffrey R. Wank, et al., Powder Technology 142 (2004) 59-69. Briefly, the ALD process using a fluidized bed reactor, illustrated in FIG. 2, is described. Uncoated particles may be supported on a porous plate or screen 220 within a fluidized bed reactor 200. A fluidizing gas (such as $N_2$) may be passed into the reactor 200 through line 240 and upwardly through the plate or screen 220, lifting the particles and creating a fluidized bed. Fluid (gaseous or liquid) reagents may be introduced into the bed 200 also through line 240 for reaction with the surface of the particles. The fluidizing gas may also act as an inert purge gas following each dosing of the particles with reagent for removing unreacted reagents and volatile or gaseous reaction products.

If desired, multiple layers of ultra-thin coatings may be deposited on the particulate material. For example, an intermediate ultra-thin layer may be applied to provide a surface to which a desired outer layer can be applied more easily. Where multiple layers of coating are desired, the multiple layers may possess identical compositions, or the multiple layers may vary in composition. It is specifically within the scope of the present disclosure that the multiple layers may include combinations of any of the above described coating compositions such, for example, metal-on-metal, metal-on-oxide, and oxide-on-oxide. One of ordinary skill in the art would recognize that depending on the compositions of the applied coating, during any subsequent sintering conditions, the coating may undergo a number of transitions. For example, an ALD bilayer of $Al_2O_3/TiO_2$, after sintering, may react and form an aluminum titanate coating. Further, one of ordinary skill in the art would recognize that there is no limitation on the combination or number of layers which may be provided on the particulate material of the present disclosure. It is also specifically within the scope of the present disclosure that a subsequent coating layer may be deposited by a method other than ALD, such as CVD or PVD, for example, on an ALD-deposited coating.

Alternatively, a coating may be applied using atomic layer deposition methods as described above, and the coating may subjected to one or more reactions to form a modified coating. This technique may be used, for example, for creating ultra-thin coatings of various types that are not amenable to deposition using atomic layer deposition techniques. For example, various types of ultra-thin oxide coatings can be formed using the atomic layer deposition techniques described above, and then can be carburized to convert the oxide to the corresponding carbide.

The coatings disclosed herein may, in various embodiments, be either amorphous or crystalline in nature. Further, if a coating is amorphous in nature and is desirably crystalline, the particle having the coating thereon may be placed in a furnace at the appropriate environment for crystallization of the coating. In a particular embodiment, crystallization may occur in air at temperature of at least 600°C.

Further, various inorganic nanotubes that may find use in the composites of the present disclosure may include those formed using a carbon nanotube as a template, applying a conformal coating via ALD on the carbon nanotubes, and then removing the carbon nanotube, such as by etching, to form an inorganic nanotube. Such inorganic coatings, and thus nanotubes, may include the various coatings described above. U.S. Patent No. 7,005,391, which is herein incorporated by reference in its entirety, discloses the formation of such inorganic nanotubes via ALD and subsequent etching of the underlying carbon nanotube template.

A hard phase particulate materials that may be used with reinforcing tubular materials to form the composite materials of the present disclosure may include various materials used to form cermet materials having application in the drill bit and cutting tool industry. In one embodiment, the hard phase materials may include tungsten carbide particles or other metal carbides, such as titanium and tantalum carbides, and the like. Among the types of tungsten carbide particles that may be used to form composite bodies of the present disclosure include cast tungsten carbide, macrocrystalline tungsten carbide, carburized tungsten carbide, and cemented tungsten carbide.

Suitable particle sizes for the hard phase particulate material of the present disclosure may range up to 500 microns in one embodiment, and from the nanometer range (e.g., about 0.001 microns) to about 100 microns in another embodiment, and from about 0.005 to 50 microns in yet another embodiment. In one embodiment, the particulate materials of the present disclosure have surface areas ranging from about 0.1 to 200 $m^2$/g or more.

As discussed above, one type of tungsten carbide is macrocrystalline carbide. This material is essentially stoichiometric WC in the form of single crystals. Most of the macrocrystalline tungsten carbide is in the form of single crystals, but some bicrystals of WC may form in larger particles. The manufacture of macrocrystalline tungsten carbide is disclosed, for example, in U.S. Patent Nos. 3,379,503 and 4,834,963, which are herein incorporated by reference.

U.S. Patent No. 6,287,360, which is assigned to the assignee of the present invention and is herein incorporated by reference, discusses the manufacture of carburized tungsten carbide. Carburized tungsten carbide, as known in the art, is a product of the solid-state diffusion of carbon into tungsten metal at high temperatures in a protective atmosphere. Carburized tungsten carbide grains are typically multi-crystalline, i.e., they are composed of WC agglomerates. The agglomerates form grains that are larger than individual WC crystals. These larger grains make it possible for a metal infiltrant or an infiltration binder to infiltrate a powder of such large grains. On the other hand, fine grain powders, e.g., grains less than 5 microns, do not infiltrate satisfactorily. Typical carburized tungsten carbide contains a minimum of 99.8% by weight of carbon infiltrated WC, with a total carbon content in the range of about 6.08% to about 6.18% by weight. Tungsten carbide grains designated as WC MAS 2000 and 3000-5000, commercially available from H.C. Stark, are carburized tungsten carbides suitable for use in the formation of the matrix bit body disclosed herein. The MAS 2000 and 3000-5000 carbides have an average size of 20 and 30-50 micrometers, respectively, and are coarse grain conglomerates formed as a result of the extreme high temperatures used during the carburization process.

Another form of tungsten carbide is cemented tungsten carbide (also known as sintered tungsten carbide), which is a material formed by mixing particles of tungsten carbide, typically monotungsten carbide, and cobalt particles, and sintering the mixture. Methods of manufacturing cemented tungsten carbide are disclosed, for example, in U.S. Patent Nos. 5,541,006 and 6,908,688, which are herein incorporated by reference. Sintered tungsten carbide is commercially available in two basic forms: crushed and spherical (or pelletized). Crushed sintered tungsten carbide is produced by crushing sintered components into finer particles, resulting in more irregular and angular shapes, whereas pelletized sintered tungsten carbide is generally rounded or spherical in shape.

Briefly, in a typical process for making cemented tungsten carbide, a tungsten carbide powder having a predetermined size (or within a selected size range) is mixed with a suitable quantity of cobalt, nickel, or other suitable binder. The mixture is typically prepared for sintering by either of two techniques: it may be pressed into solid bodies often referred to as green compacts, or alternatively, the mixture may be formed into granules or pellets such as by pressing through a screen, or tumbling and then screened to obtain more or less uniform pellet size. Such green compacts or pellets are then heated in a controlled atmosphere furnace to a temperature near the melting point of cobalt (or the like) to cause the tungsten carbide particles to be bonded together by the metallic phase. Sintering globules of tungsten carbide specifically yields spherical sintered tungsten carbide. Crushed cemented tungsten carbide may further be formed from the compact bodies or by crushing sintered pellets or by forming irregular shaped solid bodies.

The particle size and quality of the sintered tungsten carbide can be tailored by varying the initial particle size of tungsten carbide and cobalt, controlling the pellet size, adjusting the sintering time and temperature, and/or repeated crushing larger cemented carbides into smaller pieces until a desired size is obtained. In one embodiment, tungsten carbide particles (unsintered) having an average particle size of between about 0.2 to about 20 microns are sintered with cobalt to form either spherical or crushed cemented tungsten carbide. In a preferred embodiment, the cemented tungsten carbide is formed from tungsten carbide particles having an average particle size of about 0.8 to about 5 microns. In some embodiments, the amount of cobalt present in the cemented tungsten carbide is such that the cemented carbide is comprised of from about 6 to 8 weight percent cobalt.

Cast tungsten carbide is another form of tungsten carbide and has approximately the eutectic composition between bitungsten carbide, $W_2C$, and monotungsten carbide, WC. Cast carbide is typically made by resistance heating tungsten in contact with carbon, and is available in two forms: crushed cast tungsten carbide and spherical cast tungsten carbide. Processes for producing spherical cast carbide particles are described in U.S. Pat. Nos. 4,723,996 and 5,089,182, which are herein incorporated by reference. Briefly, tungsten may be heated in a graphite crucible having a hole through which a resultant eutectic mixture of $W_2C$ and WC may drip. This liquid may be quenched in a bath of oil and may be subsequently comminuted or crushed to a desired particle size to form what is referred to as crushed cast tungsten carbide. Alternatively, a mixture of tungsten and carbon is heated above its melting point into a constantly flowing stream which is poured onto a rotating cooling surface, typically a water-cooled casting cone, pipe, or concave turntable. The molten stream is rapidly cooled on the rotating surface and forms spherical particles of eutectic tungsten carbide, which are referred to as spherical cast tungsten carbide.

The standard eutectic mixture of WC and $W_2C$ is typically about 4.5 weight percent carbon. Cast tungsten carbide commercially used as a matrix powder typically has a hypoeutectic carbon content of about 4 weight percent. In one embodiment of the present invention, the cast tungsten carbide used in the mixture of tungsten carbides is comprised of from about 3.7 to about 4.2 weight percent carbon.

The various tungsten carbides disclosed herein may be selected so as to provide a bit that is tailored for a particular drilling, mining, or other cutting application. For example, the type, shape, and/or size of carbide particles used in the formation of a composite bit body may affect the material properties of the formed composite body, including, for example, fracture toughness, transverse rupture strength, and erosion resistance.

The mixture includes preferably at least 80% by weight carbide of the total matrix powder. While reference is made to tungsten carbide, other carbides of Group 4a, 5a, or 6a metals may be used. Although the total carbide may be used in an amount less than 80% by weight of the matrix powder, such matrix bodies may not possess the desired physical properties to yield optimal performance.

In a composite body, the carbide particles may be surrounded by a metallic binder. The metallic binder may be formed from a metallic binder powder and/or an infiltration binder. The metallic binder powder may be pre-blended with the matrix powder hard carbide particles. To manufacture a composite body via infiltration, matrix powder is infiltrated by an infiltration binder. The term "infiltration binder" herein refers to a metal or an alloy used in an infiltration process to bond the various particles of tungsten carbide forms together. Catalyst materials that may be used to form the relative ductile phase of the various composites of the present disclosure may include all transition metals, main group metals and alloys thereof, including various group IVa, Va, and VIa ductile metals and metal alloys including, but not limited to Fe, Ni, Co, Cu, Ti, Al, Ta, Mo, Nb, W, V, and alloys thereof, including alloys with materials selected from C, B, Cr, and Mn. For example, copper, nickel, iron, and cobalt may be used as the major constituents in the infiltration binder. Other elements, such as aluminum, manganese, chromium, zinc, tin, silicon, silver, boron, and lead, may also be present in the infiltration binder. In one preferred embodiment, the infiltration binder is selected from at least one of nickel, copper, and alloys thereof. In another preferred embodiment, the infiltration binder includes a Cu-Mn-Ni-Zn alloy.

In one embodiment, the particulate material comprises tungsten carbide particles and a metallic binder powder. In a preferred embodiment, nickel and/or iron powder may be present as the balance of the matrix powder, typically from about 2% to 12% by weight. In addition to nickel and/or iron, other Group VIIIB metals such as cobalt and various alloys may also be used. For example, it is expressly within the scope of the present invention that Co and/or Ni is present as the balance of the mixture in a range of about 2% to 15% by weight. Metal addition in the range of about 1% to about 12% may yield higher matrix strength and toughness, as well as higher braze strength. In another preferred embodiment, the matrix powder comprises nickel in an amount ranging from about 2 to 4 weight percent of the matrix powder and iron in an amount ranging from about 0.5 to 1.5 weight percent of the matrix powder.

In another embodiment, the ductile binder phase may include a compound containing silicon and/or titanium and oxygen, and a titanate, silicate, or complex oxide of a metal selected from the group of iron, cobalt, nickel and manganese in another embodiment. The use of titanates and silicates as binders is described, for example, in U.S. Patent No. 5,769,176, which is herein incorporated by reference in its entirety. In yet another embodiment, the ductile binder phase may include any of the compositions that may comprise the ultra-thin coating discussed above.

In a particular embodiment, the composites of the present disclosure may be prepared by forming a mixture or blend of a hard particulate/ceramic powder phase and a metal phase with a nanotube filler integrated into at least one of the two phases. The amount of nanotube filler that may be used in the matrix bodies of the present disclosure may range from about 0.5 to 50 parts by volume (of the mixture) in one embodiment, and from 1 to 20 parts by volume in another embodiment. In other embodiments, the nanotube material may be present in an amount up to 10 percent by volume and up to 1 percent by volume in yet another embodiment. Alternatively, the nanotubes may be present in an amount up to one-third of the metallic binder present in the composite body.

Integration of the nanotube filler into the matrix body may include any means as known to those skilled in the art. As used herein, integration refers to any means for adding the nanotubes to a component of the composite body such that the nanotubes are a component of the formed composite body, *i.e.,* by dispersion or other forms of incorporation of the nanotube filler as known to those skilled in the art. In some embodiments the nanotubes may be integrated in such a manner so as to achieve a generally uniform dispersion of the nanotubes through the formed composite body.

For example, in one embodiment, blending of the nanotube fillers with a carbide particulate phase may be accomplished by any suitable wet mixing technique that will provide a dispersion of the nanotube filler in the carbide powder. Typically, a homogenous dispersion, with minimal agglomeration and clumping may be prepared, for example, by dispersing the components, individually or as a mixture, in a mixing medium, such as a low molecular weight alcohol (e.g., ethanol), with an ultrasonic probe, blending the dispersions of the components that are individually dispersed, and evaporating the solvent in an ultrasonic bath. Further, the mixing media may optionally contain a surfactant, as known to those of skill in the art, that may further promote dispersion of the nanotubes in the particulate phase. Further, while reference is made to the wet mixing of the nanotube material with carbide particles, one of ordinary skill in the art would appreciate that the nanotubes may alternatively be mixed with a binder phase.

Further, dry mixing or mixing with other volatile media may also be used. Mechanical mixing may be performed by ball-milling in conventional rotary mills that mix the powder mixture with the assistance of tumbling balls. The sizes of the balls, the number of balls used per unit volume of powder, the rotation speed of the mill, the temperature at which the milling is performed, and the length of time that milling is continued can all vary widely. Best results may generally be achieved with a milling time ranging from about 4 hours to about 50 hours. The degree of mixing may also be affected by the "charge ratio," which is the ratio of the mass of the balls to the mass of the powder. A charge ratio of from about 5 to about 20 will generally provide proper mixing. The milling may be performed on the powders while suspended in the liquid suspending agent referred to above.

Alternatively, one of ordinary skill in the art would recognize that other means may be used to integrate or incorporate nanotubes into the composites of the present disclosure, such as, for example, vapor co-deposition (in which the nanostructure material and a particulate phase are sublimed, mixed in the vapor phase, and then condensed on a substrate), spraying coating of particles or the infiltration binder (such as that described in U.S. Patent Publication No. 20030012951, which is herein incorporated by reference in its entirety), infiltration by electromagnetic levitation (such as that described in U.S. Patent Publication No. 2004/0206470, which is herein incorporation by reference in its entirety), extrusion, either high or regular shear, (such as that described in U.S. Patent Publication No. 20040029706, which is herein incorporated by reference in its entirety), or infiltration of a perform (such as that described in U.S. Patent No. 6,934,600).

In various embodiments, the nanotubes may be incorporated in the composite body in such a manner as to form a random distribution. In other embodiments, however, the nanotubes may be incorporated in such as manner so that the nanotubes may have an oriented structure, such as uniform orientation in two dimensions or three dimensions. U.S. Patent Nos. 7,105,596 and 6,790,425, which are herein incorporated by reference in their entirety, discuss the macroscopic assembly of nanotubes in a structure.

The composite bodies of the present disclosure may be prepared by a number of different methods, e.g., by infiltration, casting, or other sintering techniques, including layered manufacturing. Further, one of ordinary skill in the art would appreciate that other methods may be used, such as, for example, solid state or liquid phase sintering, pneumatic isostatic forging, spark plasma sintering, microwave sintering, gas phase sintering, and hot isostatic pressing.

Infiltration processes that may be used to form a composite body of the present disclosure may begin with the fabrication of a mold, having the desired body shape and component configuration. A mass of carbide particles and, optionally, metal binder powder may be infiltrated with a molten infiltration binder. In various embodiments, the nanotube materials may be integrated into the resulting composite body through at least one of the carbide particles, the metal binder powder, and the infiltration binder.

Alternatively, casting processes may be used, in which a molten mixture of carbide particles, a binder, and nanotube particles may be either poured into a mold, or melted within a mold, and then cooled to cast the composite body. As described above, the nanotube materials may be integrated into the resulting composite body through at least one of the carbide particles or metal binder.

Layered manufacturing of a composite body involves the sintering of a first layer of particles together by a layered manufacturing equipment, after which a second layer of particles is disposed over the first layer and sintered in selected regions of the second layer together and to the first layer. The process repeats to fabricate subsequent layers until the desired part has been formed from the composite material particles. Once a drill bit body or other article of manufacture has been fabricated from the composite body material, the particulate-based part may be infiltrated with a binder material that binds adjacent particles of matrix material together, and forms a substantially integral part that represents the model used to generate the bit body or other article. U.S. Patent Nos. 5,544,550 and 5,433,280 discuss the use of layered manufacturing techniques to form bit bodies. As described above, the nanotube materials may be integrated into the resulting composite body through at least one of the carbide particles or metal binder.

Composite bodies of the present disclosure may be used in a number of different applications, such as tools for drilling, mining, and construction applications, including for example, composite bodies for drill bits, mining picks, core bits, etc, where mechanical properties of high fracture toughness, wear resistance, and hardness are highly desired. Additionally, the composite body may be used to form bit bodies and/or other wear and cutting components in such downhole cutting tools as roller cone bits, percussion or hammer bits, and drag bits, and a number of different cutting and machine tools.

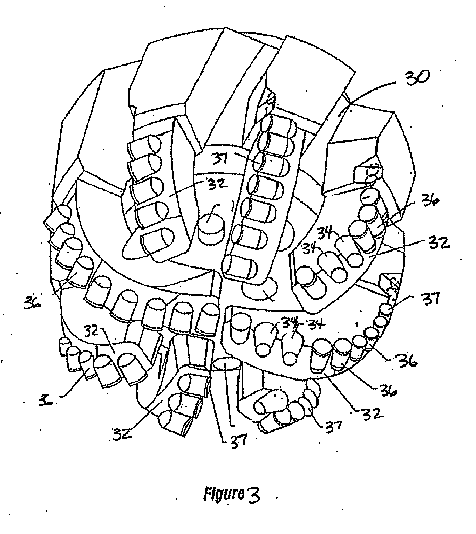

Referring to FIG. 3, a drag bit body 30 is formed with blades 32 at its lower end. A plurality of recesses or pockets 34 are formed in the faces to receive a plurality of conventional polycrystalline diamond compact cutters 36. The PDC cutters, typically cylindrical in shape, are made from a hard material such as tungsten carbide and have a polycrystalline diamond layer covering the cutting face 37. The PDC cutters are brazed into the pockets after the bit body 30 has been made. In one embodiment, the bit body 30 comprises a composite body formed in accordance with the present disclosure. Methods of making composite or matrix bit bodies are known in the art and are disclosed for example in U.S. Patent No. 6,287,360, which is assigned to the assignee of the present invention and hereby incorporated by reference in its entirety.

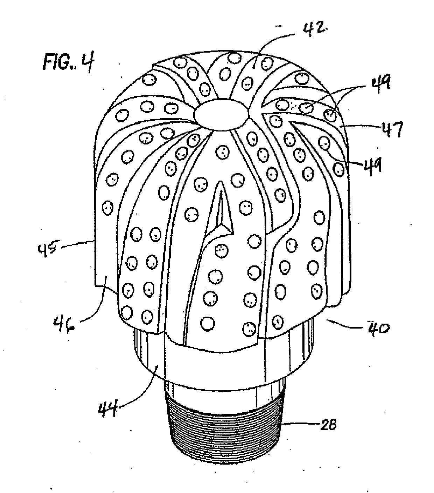

A diamond impregnated diamond bit manufactured according to embodiments of the invention is illustrated in FIG. 4. Referring now to FIG. 4, a diamond impregnated drill bit 40 includes a shank 44 and a crown 46. Shank 44 may be formed of steel and includes a threaded pin 48 for attachment to a drill string. Crown 46 has a cutting face 42 and outer side surface 45. According to one embodiment, crown 46 is a composite bit body according to one embodiment of the present invention. Additionally, crown 46 may optionally include various surface features, such as raised ridges 47 and inserts 49. Once crown 46 is formed, inserts 49 may be mounted in the sockets (not shown) and affixed by any suitable method, such as brazing, adhesive, mechanical means such as interference fit, or the like.

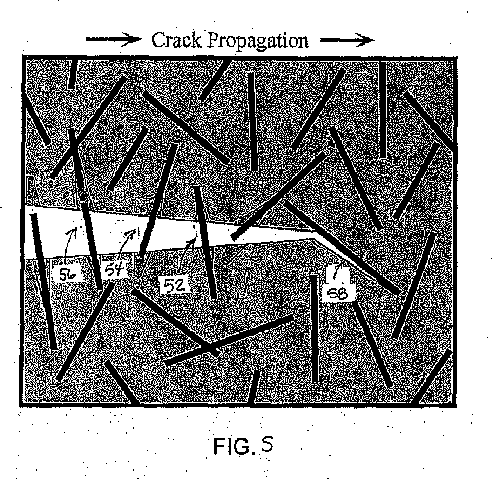

As described above, matrix bodies of the present disclosure having reinforcing nanotube materials therein may provide for an increase in toughness. Referring to FIG. 5, a schematic of the reinforcing effects of the nanotube material in a matrix body of the present disclosure is shown. As shown in FIG. 5, as a material is subjected to a load, and as a crack begins to propagate through the material, it is postulated that the nanotube materials may reinforce the composite material in one or more of several mechanisms. First, incorporation of nanotubes may allow for fiber bridging 52, *i.e.,* the bridging of the crack wake by the nanotubes. A toughening effect may also be achieved when the nanotubes either distributing load from the crack tip while remaining intact, debonding between the nanotubes and the surrounding material followed by pull-out 84, and/or fracture of the individual nanotubes 56 followed by energy adsorption through pull-out of the broken nanotube. An alternative theory of a toughening mechanism is crack deflection 58. When a crack propagates through a material, a nanotube being of greater strength than the surrounding material, depending on the orientation of the nanotube in the composite, crack propagation may be deflected away from the axis of highest stress to a less efficient plane directed by the longitudinal orientation of the nanotube. This may lead to increased fracture energy through increased fracture surface area and lower driving forces due to the reduced resolved normal stresses at the crack tip.

Advantageously, embodiments of the present disclosure may provide for at least one of the following. By incorporating a reinforcing nanotube material into a composite body, composite bodies may be formed having an increased toughness. Furthermore, because the increases in toughness may be obtained by adding nanotubes, the fracture toughness may be increased without substantially altering the composition, and thus wear resistance of the body. Incorporation of coated nanotubes into the composite material may provide for increased wettability and interfacial adhesion of the nanotubes within the surrounding metal phase, thereby resulting in a homogenous dispersion in the composite. Improvements in creep resistance and stress relaxation in coated nanotubes may further allow for improved high temperature performance of reinforced composite structures.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1.  A composite body for cutting tools, comprising:

    a ductile phase;
    a plurality of carbide particles dispersed the ductile phase; and
    a plurality of nanotubes integrated into the composite body.

2.  The composite body of claim 1, wherein the plurality of carbide particles comprise at least one of tungsten carbide, tantalum carbide, titanium carbide, or combinations thereof

3.  The composite body of claim 1, wherein the plurality of nanotubes comprise carbon nanotubes.

4.  The composite body of claim 1, wherein the plurality of nanotubes comprise inorganic nanotubes.

5.  The composite body of claim 4, wherein the inorganic nanotube is formed by depositing an inorganic coating by atomic layer deposition on a carbon nanotube and removing the carbon nanotube.

6.  The composite body of claim 1, wherein the plurality of nanotube materials comprises a coating deposited by atomic layer deposition disposed thereon.

7.  The composite body of claim 6, wherein the coating has a thickness ranging from about 1 to 10 nm.

8.  The composite body of claim 6, wherein the coating comprises at least one of a metal, ceramic materials, alloys thereof, or combinations thereof.

9.  The composite body of claim 1, wherein the ductile phase comprises at least one of Fe, Ni, Co, and alloys thereof.

10.  The composite body of claim 1, wherein at least one of an end cap or sidewall of the nanotubes is functionalized.

11.  A method of forming a composite body for a cutting tool, comprising:

    integrating a plurality of nanotubes in one of a plurality of carbide particles and a binder phase;
    mixing the other of the one of a plurality of carbide particles and a binder phase; and
    consolidating the mixture.

12.  The method of claim 11, wherein the plurality of nanotubes comprise carbon nanotubes.

13.  The method of claim 11, wherein the integrating comprises at least one of vapor co-deposition, mixing, spray mixing, ball milling, electromagnetic levitation, infiltration of a perform, and extrusion.

14.  The method of claim 11, wherein the integrating comprises dispersing the plurality of nanotubes in the plurality of carbide particles.

15.  The method of claim 11, wherein the integrating comprises dispersing the plurality of nanotubes into a plurality of binder particles.

16. The method of claim 11, wherein the integrating comprises integrating the plurality of nanotubes into an infiltration binder.

17. The method of claim 11, wherein the consolidating comprises at least one of infiltration, casting, and sintering.

18. A drill bit, comprising:

    a bit body, the bit body comprising:

        a ductile phase;
        a plurality of carbide particles dispersed the ductile phase; and
        a plurality of nanotubes integrated into the bit body; and

    at least one cutting element for engaging the formation disposed on the bit body.

Fig. 1

FIG. 2

Figure 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 85883006 P
- US 91716307 P
- US 7122165 B
- US 7105596 B
- US 7048999 B
- US 6875412 B
- US 6835366 B
- US 6790425 B
- US 20050255030 A
- US 6613383 B
- US 6913827 B
- US 7005391 B
- US 3379503 A
- US 4834963 A
- US 6287360 B
- US 5541006 A
- US 6908688 B
- US 4723996 A
- US 5089182 A
- US 5769176 A
- US 20030012951 A
- US 20040206470 A
- US 20040029706 A
- US 6934600 B
- US 5544550 A
- US 5433280 A

### Non-patent literature cited in the description

- **DRESSELHAUS, M. S. et al.** Science of Fullerenes and Carbon Nanotubes. Academic Press, 1996
- **AJAYAN, P. M. et al.** Nanometre-Size Tubes of Carbon. *Rep. Prog. Phys.,* 1997, vol. 60, 1025-1062
- **PEIGNEY, A. et al.** Carbon nanotubes in novel ceramic matrix nanocomposites. *Ceram. Inter.,* 2000, vol. 26, 677-683
- **P.M. AJAYAN ; T.W. EBBESEN.** Nanometre-Size Tubes of Carbon. *Rep. Prog. Phys.,* 1997, vol. 60, 1025-1062
- **JEFFREY R. WANK et al.** Nanocoating Individual Cohesitve Boron Nitride Particles in a Fluidized Bed Reactor. *Powder Technology,* 2004, vol. 142, 59-69